# EUROPEAN PATENT APPLICATION

(11) **EP 4 685 978 A1**
(43) Date of publication of application: **28.01.2026**
(21) Application number: 24190176.8
(22) Date of filing: 22.07.2024
(51) Int. Cl.: H01M 50/503, H01M 50/249, H01M 50/552

(54) **SYSTEMS AND METHODS FOR IMPROVED BATTERY PACK ASSEMBLY**

(71) Applicant: Ford Global Technologies, LLC, Dearborn, MI 48126 (US)
(72) Inventor: Scrimshaw, David, Colchester, CO6 4TZ (GB)
(74) Representative: Haley Guiliano International LLP

(57) **Abstract**

The present invention relates to a battery pack (220) comprising a first battery cell pair with a first cell (222A) and a second cell (222B). The first cell (222A) has a first terminal (122) extending towards the second cell (222B), and the second cell (222B) has a second terminal (122) extending towards the first cell (222A). The first terminal (122) has a first terminating portion folded towards the second terminal and extending back towards the first cell (222A), and the second terminal (122) has a second terminating portion folded towards the first terminal and extending back towards the second cell (222B). The battery pack (220) also includes a clip (112) configured to bias the first and second terminals towards each other, disposed in a space between the first and second terminals (122).

## Description

### FILED OF INVENTION

The present disclosure relates to the field of battery pack assembly and thermal management systems. More specifically, but not exclusively, it pertains to systems and methods for securing battery cell tabs within a battery pack, providing electrical connectivity, and managing the performance and efficiency of battery packs used in various applications such as electric vehicles, portable electronic devices, and large-scale energy storage systems.

### BACKGROUND

Battery packs are a common source of power for a variety of applications, including electric vehicles, portable electronic devices, and large-scale energy storage systems. These battery packs typically consist of a plurality of individual battery cells that are electrically interconnected to provide a desired voltage and current output. The individual battery cells are often arranged in a specific configuration within the battery pack to optimize the performance and efficiency of the battery pack.

The electrical interconnection of the individual battery cells within the battery pack is typically achieved through the use of busbars or similar conductive elements. These busbars are often mechanically secured to the battery cells and provide a conductive path for the flow of electrical energy between the cells. The busbars are typically arranged in a specific configuration to facilitate the desired electrical interconnection of the cells.

In addition to the electrical interconnection of the cells, the assembly of the battery pack also involves the mechanical linkage of the cells. This is often achieved through the use of mechanical clips or other similar devices that secure the cells in place within the battery pack. These mechanical clips also provide a means of physically connecting the cells to the busbars or other conductive elements.

Thermal management is another consideration in the design and assembly of battery packs. The operation of the battery cells generates heat. To manage this heat, battery packs often include thermal propagation suppression devices. These devices are designed to absorb, reflect, or dissipate the heat generated by the battery cells, thereby enhancing the overall performance and lifespan of the battery pack.

The assembly and industrialization process of the battery pack involves the connection of cell tabs to high voltage terminals, the connection of sense leads, and the suppression of thermal propagation. This process can be complex and time-consuming, requiring a high degree of precision and expertise.

### SUMMARY OF INVENTION

According to an aspect of the present disclosure, a battery pack includes a first battery cell pair comprising a first cell and a second cell, e.g., next to each other or near to each other. In some examples, the first cell and a second cell are adjacent, such that they share at least one common boarder, or are separated by an interstitial material. The first cell includes a first terminal extending away from the first cell and towards the second cell, and the second cell includes a second terminal extending away from the second cell and towards the first cell. The first terminal includes a first terminating portion folded towards the second terminal and extending back towards the first cell, and the second terminal includes a second terminating portion folded towards the first terminal and extending back towards the second cell.

In some examples, the battery pack may include a clip configured to bias the first and second terminals towards each other. The clip is disposed in a space in between the first and second terminals. This clip is positioned within the intervening space that separates the first and second terminals, serving not just as a physical bridge between them but also enhancing the electrical connection by maintaining consistent pressure. The clip's presence ensures that the terminals remain in their intended alignment and orientation, which is particularly beneficial in environments where the battery pack may be subject to vibration or movement. In some examples, the clip may be configured to couple the first terminal to the second terminal, and optionally to one or more additional terminals. In some examples, the clip may be configured to be removable from the terminals. For example, following assembly of the clip to couple the terminals, the clip may be removed in a manner causing no or little damage to the terminals. In this manner, a battery cell may be removed from a battery array, e.g., for maintenance purposes. Thus, usage of the proposed clip to couple the terminals can lead to a battery pack having enhanced serviceability. In some examples, the clip provides strain relief, e.g., allowing the terminals to move under vibration without fracturing or pulling out of the cell. For example, the clip may be configured to facilitate coupling multiple terminals without adding additional stresses to the coupled terminal assembly.

In some examples, the battery pack may include a second battery cell pair next to the first battery cell pair and a linking element configured to electrically couple the first battery cell pair to the second battery cell pair. This configuration allows for a cohesive and efficient energy distribution system within the battery pack.

In some examples, the linking element may be configured to be inserted into the clip between the first terminal and the second terminal. The linking element may include features that allow it to be securely retained by the clip, such as notches or protrusions that interact with corresponding structures within the clip. This configuration ensures that the linking element remains in place during the operation of the battery pack and maintains a consistent electrical connection between the terminals.

In some examples, the battery pack may include a welded joint securing an interface between the first terminal, the clip, the linking element, and the second terminal. This welded joint may enhance the mechanical robustness and electrical reliability of the connection by creating a fixed bond between these components. The welding process may involve techniques such as resistance welding, laser welding, or ultrasonic welding, which are selected based on factors such as the materials of the components, the desired strength of the joint, and the thermal characteristics of the battery pack. The inclusion of the welded joint may also contribute to the overall structural integrity of the battery pack, ensuring that the connections remain stable under various operating conditions, including vibration, thermal cycling, and mechanical stress.

In some examples, the battery pack may include an insulating cover attachable to the linking element. In some examples, the integrated isolation cover and linking element is configured to provide strain relief for the cell tabs during thermal expansion and contraction. This feature helps to prevent mechanical stress and potential deformation of the cell tabs, ensuring a reliable and efficient connection.

In some examples, the battery pack may include a sense lead connected to the clip. This connection is used for monitoring operational parameters of the battery pack, such as voltage and current. The sense lead connection could be integrated into the mechanical clip or the linking element assembly.

In some examples, the sense lead connection includes a wireless transmitter. This transmitter allows for remote monitoring of the battery pack's operational parameters, providing real-time data on the performance and condition of the battery pack.

In some examples, the clip may be configured to electrically couple the first terminal to the second terminal.

In some examples, the battery pack may include a thermal propagation suppression device disposed in a space between the first and second cells. This device is placed in an inter-cell terrace area, which is the space between individual cells within the battery pack. The thermal propagation suppression device could be designed to absorb, reflect, or dissipate heat, thereby managing the heat generated within the battery pack and preventing overheating and localized swelling in battery cells.

In some examples, the method of assembling the battery pack may include installing the clip with a tool. The tool is configured to open the clip by an amount to allow it to be installed over the terminals and allow the linking element to be inserted into the clip. The tool is then removed, releasing the clip to provide a biasing force on the terminals and the linking element to hold them together. The sense lead is then attached, and the assembly is welded together.

According to a further aspect of the present disclosure, there is provided a battery pack system that includes a plurality of cell tabs. These cell tabs are secured by a mechanical clip, which is designed to secure adjacent cell tabs. The system also includes an integrated isolation cover and linking element assembly. This assembly is configured to electrically connect adjacent mechanical clips. For instance, in a battery pack for an electric vehicle, the mechanical clips could be used to secure the cell tabs of individual battery cells, while the integrated isolation cover and linking element assembly could provide electrical continuity between the cells.

In other examples, the mechanical clip is made from a conductive material. This material facilitates the transfer of electrical energy between the cell tabs. For instance, the mechanical clip could be made from a conductive metal such as copper or aluminum.

In other examples, the battery pack system includes a vibration dampening material. This material is positioned adjacent to the mechanical clips and serves to reduce the transmission of mechanical stresses to the cell tabs. This can help to prevent mechanical wear and tear on the cell tabs, enhancing the durability and lifespan of the battery pack.

According to one aspect of the present disclosure, a method for providing a battery pack system is provided. The method comprises securing a plurality of battery cell tabs using a mechanical clip configured to secure adjacent cell tabs; and electrically connecting the secured mechanical clips with an integrated isolation cover and linking element assembly.

According to another aspect of the present disclosure, a method for managing thermal propagation in a battery pack system is provided. The method comprises securing a plurality of battery cell tabs using a mechanical clip configured to secure adjacent cell tabs; electrically connecting the secured mechanical clips with an integrated isolation cover and linking element assembly; and placing a thermal propagation suppression device in an inter-cell terrace area between individual cells within the battery pack.

According to another aspect of the present disclosure, there is provided a battery pack comprising: a pair of battery cells, each battery cell in the pair comprising a terminal, the terminal comprising: a body portion extending away from the battery cell; and a terminating portion adjoining the body portion, the terminating portion extending towards the battery cell.

In some examples, the terminating portion of respective terminals of the terminal pair are folded towards each other.

According to another aspect of the present disclosure there is provided a battery pack assembly comprising a battery pack and a reverse clip arrangement. The battery pack comprises: a first battery cell pair comprising a first cell and a second cell next to each other, the first cell comprising a first terminal extending away from the first cell and towards the second cell, and the second cell comprising a second terminal extending away from the second cell and towards the first cell. Wherein the first terminal comprises a first terminating portion folded back towards the first cell in configuration with the reverse clip, and wherein the second terminal comprises a second terminating portion folded back towards the second cell in configuration with the reverse clip.

In some examples, the batter pack assembly comprising the reverse clip arrangement further comprises a linking element mechanically connected to the reverse clip, The reverse clip is disposed in a space between the first and second terminals. The reverse clip is configured to hold the first terminating portion between a first portion of the reverse clip and the linking element and the second terminating portion between a second portion of the reverse clip and the linking element. Thereby providing an electrical connection between the first cell and the second cell in an assembled configuration.

According to another aspect of the present disclosure there is provided a vehicle comprising at least one of the above described battery packs.

It should be understood that while the examples described herein refer to the coupling, e.g., physically and electrically, of respective terminals of adjacent cells, e.g., respective terminals of a first cell and a second cell of cell pair, the disclosure covers, generally, the coupling of any appropriate number, e.g., 2, 3, 4...n, battery cell terminals. For example, while the example disclosed herein refer to 2P arrays, e.g., arrays having two cells in parallel, the disclosure extends to 3P arrays, 4P arrays, etc. Additionally or alternatively, the disclosure covers the coupling of terminal battery cell terminals that are arranged in series in an array, e.g., 2S, 3S, etc. For the avoidance of doubt, the scope of the disclosure extends to arrays having a combination of cells arranged in series and/or in parallel, e.g., XP-YS arrays.

These examples and other aspects of the disclosure will be apparent and elucidated with reference to the example(s) described hereinafter. It should also be appreciated that particular combinations of the various examples and features described above and below are often illustrative and any other possible combination of such examples and features are also intended, notwithstanding those combinations that are clearly intended as mutually exclusive.

The foregoing general description of the illustrative examples and the following detailed description thereof are merely exemplary aspects of the teachings of this disclosure and are not restrictive.

### BRIEF DESCRIPTION OF FIGURES

The above and other objects and advantages of the disclosure will be apparent upon consideration of the following detailed description, taken in conjunction with the accompanying drawings, in which:
FIG. 1A-1C illustrate various mechanical clip designs used to secure a cell tab in a battery pack system, in accordance with some examples of the present disclosure;
FIG. 2 depicts an orthogonal view of a battery pack system where a mechanical clip secures a cell tab, in accordance with some examples of the present disclosure;
FIG. 3 shows an orthogonal view of a battery pack system with an insulating barrier positioned at the top and bottom of a series of battery cells, in accordance with some examples of the present disclosure;
FIG. 4 presents an top view of a battery pack assembly process involving a first and a second battery cell, in accordance with some examples of the present disclosure;
FIG. 5 depicts a top view of a battery pack system component, focusing on the connection of a cell tab using a mechanical clip, in accordance with some examples of the present disclosure;
FIG. 6 illustrates an isometric view of a battery pack assembly where a mechanical clip is used to mechanically attach and secure a cell tab, in accordance with some examples of the present disclosure.
FIGs. 7A-7B present a flowchart of a method for assembling a battery pack, in accordance with some examples of the present disclosure; and
FIG. 8 depicts a side view of a vehicle housing a battery pack, in accordance with some examples of the present disclosure.

### DETAILED DESCRIPTION

The present disclosure provides a novel approach to the assembly and design of battery packs, particularly focusing on the connection of cell tabs. In some aspects, the disclosure introduces the use of mechanical clips or similar devices for securing cell tabs, offering an alternative to traditional methods such as welding or staking. This approach simplifies the assembly process, potentially reducing the time and effort involved, and may lead to a more compact and efficient battery pack design.

In some examples, the disclosure eliminates the use of traditional busbar plates, which typically require the insertion of tabs through slots followed by a welding process. Instead, the mechanical clips retain the cell tabs, potentially simplifying the assembly process and reducing the space requirements for cell linkage and energy distribution.

In some examples, the mechanical clip may simplify the assembly of cell tabs and high voltage (HV) terminals, potentially leading to enhanced production efficiency. The battery pack system may also include the use of the inter-cell terrace area for assembly devices and/or thermal propagation (TP) suppression devices. These devices may help manage heat within the battery pack, enhancing its performance and lifespan.

In some examples, the disclosure introduces the use of thermal propagation suppression devices within the inter-cell terrace area, which is the space between individual cells within the battery pack. These devices may help manage the heat generated within the battery pack, potentially enhancing the overall performance and lifespan of the battery pack.

Furthermore, the disclosure provides for the interlocking of inter-cell thermal barriers and side isolation covers to specific cells or cell groups within the battery pack. This feature may help suppress thermal propagation within the module, array, or pack.

In some examples, the disclosure also includes a sense lead connection for monitoring the voltage and current within the battery pack, ensuring its efficient operation. This connection may be attached to the clip, providing a means of monitoring the battery pack's operation.

In some examples, the battery pack system may offer several advantages, including increased simplicity in design and assembly, reduction in major array components, and increased thermal propagation protection. The battery pack system may also include a sense lead connection for monitoring voltage and current within the battery pack, and a method for thermal propagation suppression.

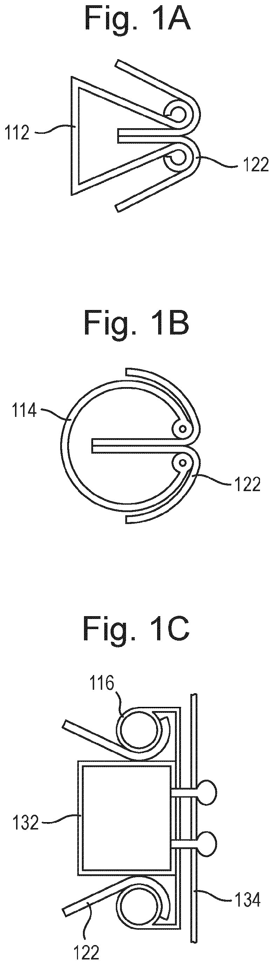

As depicted in Figs. 1A-1C, various designs of a mechanical clip 112 may be used to secure a cell tab 122 (e.g., cell terminal) in a battery pack system. In FIG. 1A, the mechanical clip 112 is shown engaging with the cell tab 122. This engagement may provide a secure, removable and efficient connection between the cell tab 122 and the mechanical clip 112.

In some examples, the mechanical clip utilized to secure the cell tabs may bear a resemblance to a "bulldog clip", a design that is widely recognized for its simplicity and effectiveness. Generally, the mechanical clip may incorporate a pair of opposing arms that are biased towards each other, e.g., by virtue of a spring-loaded hinge and/or an inherent spring force in a formed portion of at least one of the arms. These arms exert pressure on the cell tabs when they are released, ensuring a firm grip and maintaining a secure mechanical and electrical connection. This design allows for easy application and removal, which can be particularly beneficial during the assembly or maintenance process. In some examples, the triangular shape of the clip 112 may allow for a tight grip on the cell tab 122, potentially reducing the likelihood of disconnection or slippage (although any other appropriate shape is contemplated, where technically feasible).

The mechanical clip may provide a familiar and user-friendly interface for technicians and assembly workers. This familiarity can potentially reduce the learning curve associated with the assembly process, leading to increased efficiency and productivity. Furthermore, the use of the mechanical clip may facilitate the acceptance and adoption of this innovative battery pack system in the market.

Moreover, the mechanical clip can be configured to provide flexibility in accommodating cell tabs of different sizes or shapes. This can be particularly advantageous in battery pack systems that incorporate battery cells from different manufacturers or of different types. The ability to accommodate different cell tabs can make the battery pack system more versatile and adaptable, potentially expanding its range of applications.

In some examples, the mechanical clip can provide a visual indication of the connection status of the cell tabs. For instance, when the arms of the clip are released and exert pressure on the cell tabs, it can indicate that a secure connection has been established. This visual indication can provide a quick and easy way for technicians or assembly workers to verify the connection status, potentially reducing the time and effort involved in quality control or troubleshooting.

As illustrated in FIG. 1B, a circular mechanical clip 114 may also be designed to retain the cell tab 122. The circular design of the mechanical clip 114 may provide a different form factor and mechanism for attaching to the cell tab 122, demonstrating the versatility of the connection system within the battery pack.

The circular mechanical clip 114 may offer several benefits over a traditional design. In some cases, the circular form factor of the mechanical clip 114 can distribute pressure more evenly around the cell tab 122, potentially reducing the likelihood of localized stress. This even distribution of pressure is particularly beneficial in applications where the battery pack is subject to frequent vibrations or thermal cycling, as it may enhance the durability and longevity of the connection.

Additionally, the circular mechanical clip 114 may provide a more secure grip on the cell tab 122 due to its encompassing design. This can be especially advantageous when securing cell tabs that have a smaller surface area or are made from materials that are more prone to slippage. The circular clip may engage the cell tab 122 in a manner that reduces the chance of accidental disconnection or loosening, which is paramount in maintaining the integrity of the electrical connections within the battery pack system.

Furthermore, the circular mechanical clip 114 may be designed to self-align with the cell tab 122 as it is applied, simplifying the assembly process. This self-aligning feature can reduce the time and precision requirements during installation, leading to faster assembly times. The ease of application may also contribute to enhancing the overall quality and consistency of the battery pack systems produced.

In some examples, the circular mechanical clip 114 may also be designed to provide a more aesthetically pleasing appearance, which can be an advantage in battery pack systems where visual design is a consideration. The sleek and symmetrical nature of the clip may appeal to designers and consumers alike, adding to the marketability of the battery pack system.

Overall, the circular mechanical clip 114 may provide a robust and reliable alternative to a traditional design, offering advantages in terms of even pressure distribution, secure gripping, and self-alignment during installation, which may contribute to the enhanced performance and reliability of the battery pack system.

As presented in FIG. 1C, a reverse mechanical clip 116 may be used in conjunction with a linking element 132 and an insulating cover 134. The reverse mechanical clip 116 and the linking element 132 may cooperate to secure the cell tab 122, while the insulating cover 134 provides electrical insulation. This arrangement may offer a different form factor and mechanism for attaching to the cell tab 122, further demonstrating the versatility of the connection system within the battery pack.

In some examples, the design of the mechanical clip 112 could be varied to accommodate different types of cell tabs or to enhance the efficiency of the connection. For instance, the mechanical clip 112 could be designed with a wider or narrower opening to accommodate cell tabs of different sizes. Alternatively, the mechanical clip 112 could be designed with a locking mechanism to ensure a secure connection. These variations in the design of the mechanical clip 112 may allow for a more flexible and adaptable battery pack system.

In some examples, the insulating cover 134 may provide electrical insulation within the battery pack. The insulating cover 134 may be integrated with the linking clip 132, potentially simplifying the assembly process and reducing the space requirements within the battery pack.

These different clip designs demonstrate alternative methods for securing and connecting cell tabs 122 within the battery pack, each potentially offering its own advantages in terms of security, efficiency, and adaptability.

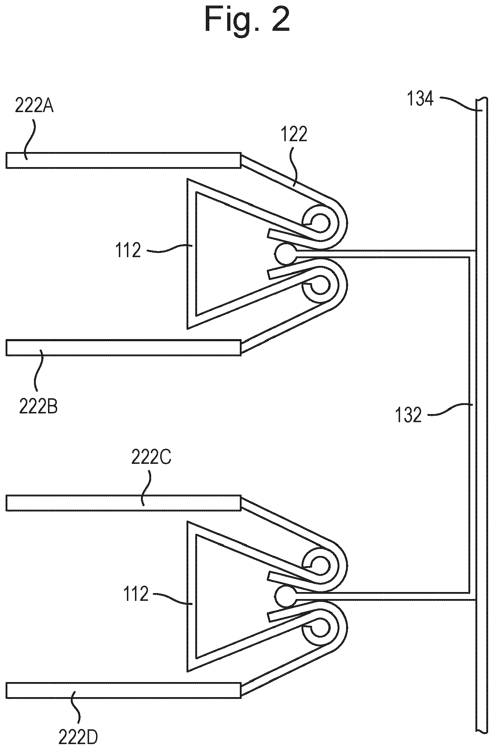

As depicted in FIG. 2, a battery pack system may include a battery cell 222A connected to an adjacent battery cell 222B by a cell tab 122 (e.g., cell terminal). The cell tab 122 may be secured by a mechanical clip 112, which ensures a mechanical and electrical connection between the cell tabs of the battery cells. An insulating cover 134 may be positioned adjacent to the cell tab 122, providing electrical insulation and physical separation from other components.

In some examples, the battery pack system may include more than two battery cells. For instance, a third battery cell 222C and a fourth battery cell 222D may be incorporated into the system. Similar to the first and second battery cells, the third and fourth battery cells may also be connected by a cell tab 122. This cell tab 122 is secured by another mechanical clip 112, ensuring a stable and efficient connection between the third and fourth battery cells.

In addition to the mechanical clips 112, a linking element 132 may be utilized to maintain electrical continuity throughout the system. The linking element 132 serves to connect the upper set of battery cells (e.g., the first and second battery cells) and the lower set of battery cells (e.g., the third and fourth battery cells). This arrangement ensures that electrical energy can flow seamlessly from one set of battery cells to the other, enhancing the overall efficiency of the battery pack system.

The use of multiple mechanical clips 112 and linking elements 132 in this manner allows for the assembly of a battery pack system with a larger number of battery cells. This scalability is a notable advantage, as it enables the design and assembly of battery pack systems with varying capacities to meet different power requirements. Furthermore, the use of mechanical clips 112 and linking elements 132 for securing cell tabs and maintaining electrical continuity simplifies the assembly process.

In some examples, the battery pack system may include a plurality of cell tabs 122. The number of cell tabs 122 may vary depending on the specific requirements of the battery pack system. For instance, a larger battery pack system may require more cell tabs 122 to ensure efficient energy distribution.

In some examples, the battery pack system may use a mechanical clip 112 to secure adjacent cell tabs 122. The mechanical clip 112 may provide a secure and efficient connection between the cell tabs 122, eliminating the traditional methods of welding or staking. This innovative approach may simplify the assembly process and reduce the area for cell linkage and energy distribution.

In some examples, the battery pack system may include an integrated isolation cover and linking element assembly 134, 132 to electrically connect adjacent mechanical clips 112. The integrated isolation cover 134 may provide electrical insulation, while the linking element 132 may provide a secure and efficient connection between the mechanical clips 112. This integrated design may simplify the assembly process and reduce the space requirements, leading to a more compact and efficient battery pack.

In some examples, the process of electrically connecting the secured mechanical clips 112 with an integrated isolation cover and linking element assembly 132 may involve positioning the linking element 132 adjacent to the mechanical clip 112. The linking element 132 may then be secured to the mechanical clip 112, creating a secure and efficient electrical connection. This process may streamline the assembly process.

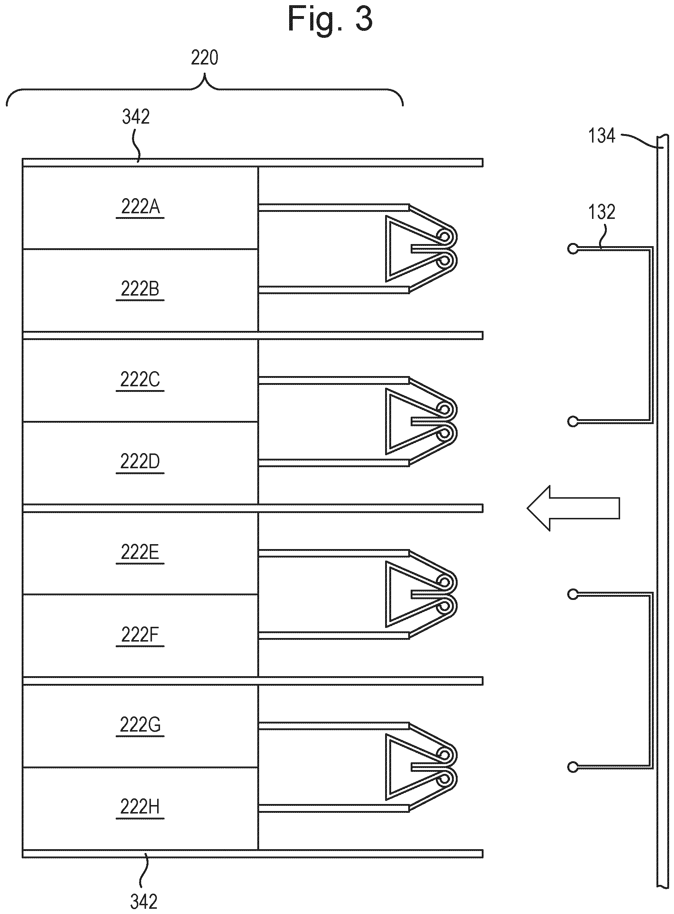

As depicted in FIG. 3, a battery pack system may include a battery pack 220 and an insulating barrier 342 positioned at the top and bottom of a series of battery cells. The series of battery cells may include a top battery cell 222A, a second battery cell 222B, a third battery cell 222C, a fourth battery cell 222D, a fifth battery cell 222E, a sixth battery cell 222F, a seventh battery cell 222G, and a bottom battery cell 222H. The battery cells may be shown in pairs A and B, C and D, E and F, G and H. Each pair of battery cells may be connected to an adjacent pair of cells by a linking element 132.

In some examples, the linking elements 132 may be electrically and mechanically linked by an integrated insulating cover 134, which spans across the battery cells to maintain electrical continuity and provide insulation. The arrangement of the linking elements 132 and the integrated insulating cover 134 may facilitate a compact and efficient battery pack design with enhanced thermal management and electrical connectivity.

In some examples, the integrated isolation cover 134 may include a heat-resistant material. The heat-resistant material may be selected based on its ability to withstand high temperatures without degrading or losing its insulating properties. This may enhance the thermal management capabilities of the battery pack system, potentially enhancing its performance and lifespan.

In some examples, the integrated isolation cover and linking element assembly 134, 132 may be configured to provide strain relief for the cell tabs 122 during thermal expansion and contraction. This may enhance the reliability and longevity of the battery pack system.

In some examples, a heat-resistant material may be incorporated into the integrated isolation cover 134. The heat-resistant material may be selected based on its ability to withstand high temperatures without degrading or losing its insulating properties. This may enhance the thermal management capabilities of the battery pack system, potentially enhancing its performance and lifespan.

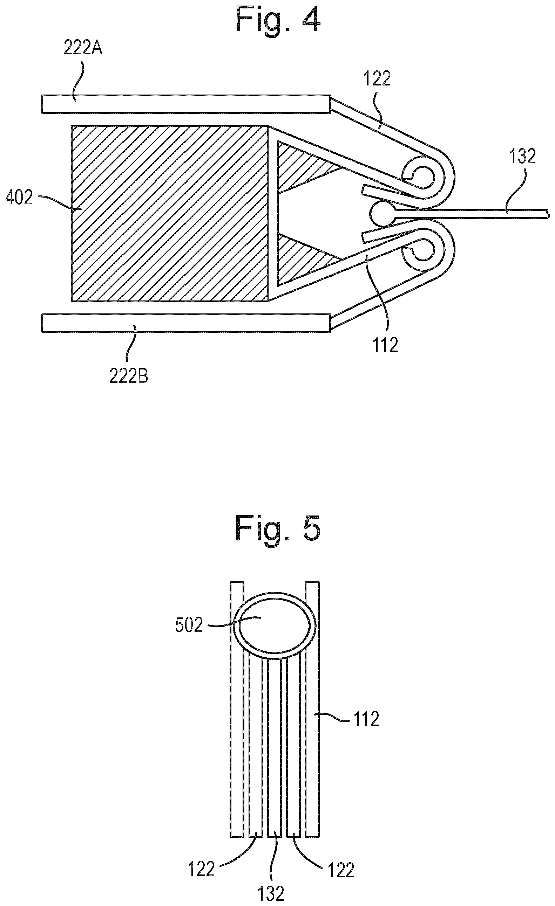

As depicted in FIG. 4, a battery pack assembly process may involve a first battery cell 222A and a second battery cell 222B. An installation block and assembly grippers 402 may be positioned to facilitate the assembly of the battery cells. A cell tab 122 may extend from the first battery cell 222A. A mechanical clip 112 may be used to mechanically secure the cell tab 122. A linking element 132 may be shown adjacent to the cell tab 122, indicating a method of electrically connecting adjacent cell tabs. This arrangement suggests that the mechanical clip 112 and linking element 132 may work in conjunction to provide both mechanical retention and electrical continuity between the battery cells.

The assembly process of the battery pack system may involve the use of an installation block and assembly grippers 402. The installation block serves as a stable platform for the assembly process, providing a secure and precise positioning of the battery cells and other components. The assembly grippers 402, on the other hand, are used to handle and manipulate the components during assembly. These grippers are designed to securely hold the components, such as the cell tabs and mechanical clips, while they are being positioned and secured. The use of the installation block and assembly grippers 402 not just simplifies the assembly process but also enhances its precision and reliability. This can potentially lead to increased production efficiency. Furthermore, the assembly grippers 402 can be designed to accommodate different types of components, making the assembly process more flexible and adaptable.

In some examples, the process of securing a plurality of battery cell tabs may involve using a mechanical clip 112. The mechanical clip 112 may be positioned over the cell tab 122 and secured in place, providing a secure and efficient connection between the cell tab 122 and the mechanical clip 112. This process may eliminate the traditional methods of welding or staking, potentially simplifying the assembly process and reducing the area for cell linkage and energy distribution.

In some examples, the process of electrically connecting the secured mechanical clips 112 with an integrated isolation cover and linking element assembly 132 may involve positioning the linking element 132 adjacent to the mechanical clip 112. The linking element 132 may then be secured to the mechanical clip 112, creating a secure and efficient electrical connection. This process may streamline the assembly process, potentially leading to increased production efficiency.

In some examples, the process of securing a plurality of battery cell tabs may involve using a mechanical clip 112. The mechanical clip 112 may be positioned over the cell tab 122 and secured in place, providing a secure and efficient connection between the cell tab 122 and the mechanical clip 112. This process may eliminate the traditional methods of welding or staking, potentially simplifying the assembly process and reducing the area for cell linkage and energy distribution.

As depicted in FIG. 5, a top view of a battery pack system component may focus on the connection of a cell tab 122 using a mechanical clip 112. The mechanical clip 112 may be positioned over the cell tab 122 and secured in place by a weld area 502, ensuring a stable and conductive connection. Below the mechanical clip 112 and cell tab 122, a linking element 132 may be shown, which is likely used to electrically connect and mechanically secure adjacent cell tabs within the battery pack system. This arrangement suggests that the mechanical clip 112 and linking element 132 may work in conjunction to provide both electrical continuity and mechanical stability for the cell tabs 122 in the battery pack.

The weld area 502 refers to a specific region where the mechanical clip 112 is securely attached to the cell tab 122. This attachment is achieved through a welding process, which involves the application of heat or pressure, or both, to create a permanent bond between the mechanical clip 112 and the cell tab 122. The weld area 502 may be a useful optional step in the assembly of the battery pack system, as it ensures a stable and conductive connection between the cell tabs 122 and the mechanical clip 112. This secure connection is integral to the efficient transfer of electrical energy within the battery pack system. The welding process used to create the weld area 502 is designed to be robust and reliable, ensuring a long-lasting and durable connection that can withstand the operational demands of the battery pack system. Furthermore, the weld area 502 is strategically positioned to optimize the mechanical stability and electrical continuity of the connection, contributing to the overall performance and efficiency of the battery pack system.

In some examples, the mechanical clip 112 may be made from a conductive material to facilitate the transfer of electrical energy. The conductive material may be selected based on its electrical conductivity properties, which may enhance the efficiency of energy transfer between the cell tabs 122. This may lead to enhanced performance of the battery pack system.

In some examples, the mechanical clip 112 may be designed with a locking mechanism to ensure a secure connection. The locking mechanism may be configured to engage with the cell tab 122, preventing it from being dislodged or disconnected from the mechanical clip 112. This may enhance the reliability and stability of the connection between the cell tab 122 and the mechanical clip 112.

In some examples, the process of providing the mechanical clip 112 with a locking mechanism may involve incorporating a latch, a clasp, or a similar device into the design of the mechanical clip 112. The locking mechanism may be designed to engage with the cell tab 122 when the mechanical clip 112 is positioned over the cell tab 122. This may ensure a secure connection of the cell tabs 122, potentially enhancing the reliability and longevity of the battery pack system.

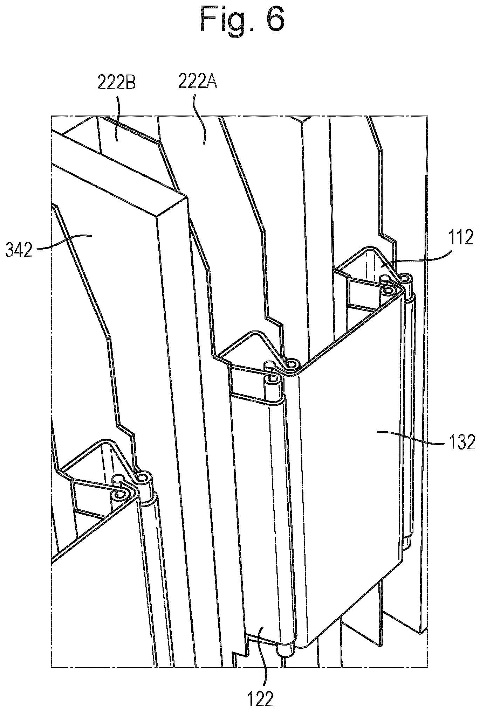

In some examples, as depicted in FIG. 6, a battery pack assembly may include a mechanical clip 112 used to mechanically attach and secure a cell tab 122 from a battery cell A 222A to a corresponding cell tab from a battery cell B 222B. The mechanical clip 112 may provide a secure and efficient connection between the cell tabs 122, eliminating the traditional methods of welding or staking. This innovative approach may simplify the assembly process and reduce the area for cell linkage and energy distribution.

In some examples, an electrical linking element 132 may provide electrical continuity between the adjacent cell tabs. The linking element 132 may be positioned adjacent to the mechanical clip 112 and secured in place, creating a secure and efficient electrical connection. This process may streamline the assembly process, potentially leading to increased production efficiency.

In some examples, a thermal insulating barrier 342 may be positioned between the battery cells to provide thermal insulation and prevent thermal propagation across the cells. The thermal insulating barrier 342 may be made from a heat-resistant material, which may withstand high temperatures without degrading or losing its insulating properties. This may enhance the thermal management capabilities of the battery pack system, potentially enhancing its performance and lifespan.

In some examples, the battery pack system may include a thermal propagation suppression device placed in an inter-cell terrace area between individual cells within the battery pack. The thermal propagation suppression device may be designed to absorb, reflect, or dissipate heat, depending on the specific requirements of the battery pack system. By managing the heat generated within the battery pack, the thermal propagation suppression device may prevent overheating, enhancing the overall performance and lifespan of the battery pack.

In some examples, a vibration dampening material may be positioned adjacent to the mechanical clips 112 to reduce the transmission of mechanical stresses to the cell tabs 122. The vibration dampening material may be selected based on its ability to absorb or dissipate vibrations, which may enhance the reliability and longevity of the battery pack system.

In some examples, the process of placing a thermal propagation suppression device in an inter-cell terrace area between individual cells within the battery pack may involve positioning the device in the space between the battery cells. The device may then be secured in place, providing a barrier to thermal propagation within the battery pack. This process may enhance the thermal management capabilities of the battery pack system, potentially enhancing its performance and lifespan.

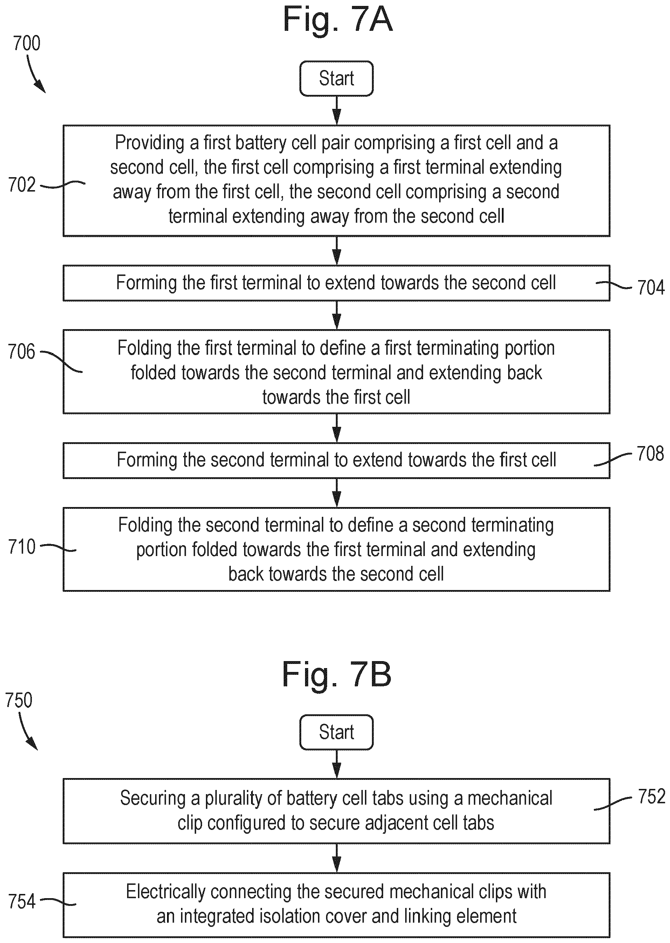

Referring to Figs. 7A-7B, a flowchart of a method for assembling a battery pack, in accordance with some examples of the present disclosure is depicted. The method involves a series of steps that facilitate the secure and efficient connection of cell tabs in a battery pack. The steps shown in processes 700 and 750 should not be considered mutually exclusive or in a particular order. References to particular clips, or cells should considered examples and the processes herein could be carried out on any other cells, cell tabs, or clips.

Referring particularly to process 700 in FIG. 7A, step 702 describes providing a first battery cell pair comprising a first cell and a second cell, the first cell comprising a first terminal extending away from the first cell, the second cell comprising a second terminal extending away from the second cell. Step 702 may be excluded in a situation where the battery as described herein is already provided to a system for assembly, as described in more detail below.

At step 704, process 700 comprises forming the first terminal, which may be a cell tab 122, to extend towards the second cell, which may be the second battery cell 222B. This formation of the first terminal may involve bending or shaping the cell tab 122 so that it extends away from the first cell, which may be the first battery cell 222A, and towards the second battery cell 222B.

At step 706, process 700 comprises folding the first terminal to define a first terminating portion. This first terminating portion may be folded towards the second terminal, which may be another cell tab 122 extending from the second battery cell 222B, and extending back towards the first battery cell 222A. This folding of the first terminal may provide a secure and efficient connection between the first and second terminals, ensuring both electrical continuity and mechanical stability within the battery pack.

At step 708, process 700 comprises forming the second terminal to extend towards the first cell. Similar to the formation of the first terminal, this may involve bending or shaping the cell tab 122 so that it extends away from the second battery cell 222B and towards the first battery cell 222A.

At step 710, process 700 comprises folding the second terminal to define a second terminating portion. This second terminating portion may be folded towards the first terminal and extending back towards the second battery cell 222B. This folding of the second terminal may provide a secure and efficient connection between the first and second terminals, ensuring both electrical continuity and mechanical stability within the battery pack.

Referring particularly to process 750 in FIG. 7B, step 752 comprises securing a plurality of battery cell tabs using a mechanical clip, such as the triangular clip 112. The triangular clip 112 is therefore configured to secure adjacent cell tabs in the battery pack 220.

At step 754, process 750 comprises electrically connecting the secured mechanical clips with an integrated isolation cover and linking element.

Processes 700 or 750 may further comprise assembling a clip to the battery pack in a space in between the first and second terminals. The clip may be any of the clips described herein, such as the triangular clip 112, the circular clip 114, or the reverse clip 116. The clip may be configured to bias the first and second terminals towards each other, potentially providing a secure and efficient connection between the first and second terminals.

Processes 700 or 750 may further comprise inserting a linking element into the clip between the first terminal and the second terminal. The linking element may be linking element 132 as shown in FIG. 2, which is configured to electrically couple the first battery cell pair to a second battery cell pair. This insertion of the linking element 132 into the clip may facilitate the electrical connection between the first and second battery cell pairs, potentially enhancing the overall performance and efficiency of the battery pack.

Processes 700 or 750 may further comprise connecting a sense lead to the clip, such as the triangular clip 112. The sense lead may provide a means of monitoring the voltage and current within the battery pack, ensuring its efficient operation. This connection may be attached to the triangular clip 112, providing a means of monitoring the battery pack's operation. This step may be performed at any suitable point in the assembly process, depending on the specific requirements of the battery pack.

Processes 700 or 750 may further comprise attaching an insulating cover, such as insulating cover 134, to the linking element, which may be a linking element 132, prior to inserting the linking element into the clip. The insulating cover 134 may provide electrical insulation, potentially preventing electrical shorts or other electrical issues within the battery pack. The insulating cover 134 may be integrated with the linking element 132, potentially simplifying the assembly process and reducing the space requirements within the battery pack, leading to a more compact and efficient battery pack design.

In some examples, the assembly process of the battery pack could be varied to enhance efficiency or to accommodate different types of cell tabs. For instance, the process could be automated to reduce the time and effort involved in assembly. Alternatively, the process could be designed to be easily adjustable, allowing for the assembly of battery packs with different configurations. This flexibility in the assembly process may allow for the production of a wide range of battery packs, potentially catering to a variety of applications and requirements.

In some examples, the methods herein may involve the use of different types of clips, such as the triangular clip 112, the circular clip 114, or the reverse clip 116, depending on the specific requirements of the battery pack. These different types of clips may offer various advantages in terms of security, efficiency, and adaptability, potentially enhancing the overall performance and efficiency of the battery pack.

In some examples, the methods herein may involve the use of different types of linking elements, such as different designs or materials of linking elements 132, depending on the specific requirements of the battery pack. These different types of linking elements may offer various advantages in terms of electrical continuity, mechanical retention, and thermal management, potentially enhancing the overall performance and efficiency of the battery pack.

Overall, the method for assembling a battery pack as depicted in Figs. 7A-7B provides a secure and efficient approach to the connection of cell tabs in a battery pack. The use of the triangular clip 112, the linking element 132, the insulating cover 134, and the sense lead, along with the potential variations in the assembly process, may provide a secure and efficient connection between the cell tabs and the battery cells, potentially enhancing the overall performance and efficiency of the battery pack.

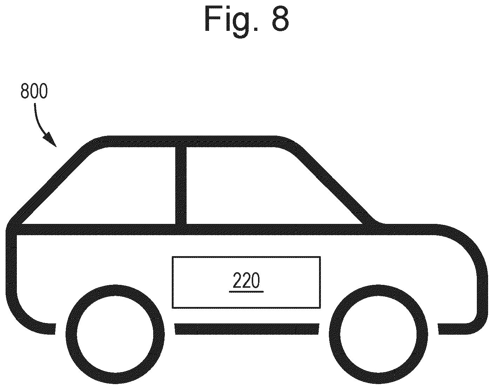

The integration of the battery pack 220 into a vehicle 800, as depicted in FIG. 8, serves as a practical demonstration of the battery pack's application. The vehicle 800 can be any type of land vehicle, including but not limited to cars, trucks, buses, or even specialized vehicles such as construction or agricultural machinery. In some instances, the vehicle 800 may be an electric vehicle, hybrid vehicle, or the like, both of which would rely on a battery pack such as battery pack 220 for propulsion power as well as powering auxiliary devices.

In some examples, the battery pack 220 provides power for the operation of the vehicle 800. This power may be used to drive the vehicle's electric motors in the cases of electric or hybrid vehicles. In other cases, the power from the battery pack 220 may be used to power the vehicle's auxiliary devices, such as the vehicle's lights, radio, air conditioning system, and other electronic devices.

In some cases, the battery pack 220 may be configured to provide a specific voltage supply depending on the requirements of the vehicle 800. For example, the battery pack 220 may provide a 12V supply for auxiliary devices in a vehicle or a 48V supply in a hybrid or electric vehicle to power the electric motors.

A plurality of clauses are provided below that are considered further non-limiting examples of the present disclosure. The clauses are provided with exemplary advantages of each clause, where appropriate.

**Clause 1:** This clause describes a battery pack system that includes a mechanical clip configured to secure adjacent cell tabs. The system also includes an integrated isolation cover and linking element assembly configured to electrically connect adjacent mechanical clips.

An exemplary advantage of Clause 1 is that it simplifies the assembly process of the battery pack system by eliminating traditional methods such as welding or staking. This can potentially lead to increased production efficiency.

**Clause 2:** This clause describes a battery pack system that includes a thermal propagation suppression device placed in an inter-cell terrace area between individual cells within the battery pack.

An exemplary advantage of Clause 2 is that it enhances the thermal management capabilities of the battery pack system. By managing the heat generated within the battery pack, the thermal propagation suppression device can prevent overheating, enhancing the overall performance and lifespan of the battery pack.

**Clause 3:** This clause describes a battery pack system where the mechanical clip is made from a conductive material to facilitate the transfer of electrical energy.

An exemplary advantage of Clause 3 is that it enhances the efficiency of energy transfer between the cell tabs, leading to enhancing performance of the battery pack system.

**Clause 4:** This clause describes a battery pack system where the mechanical clip is designed with a locking mechanism to ensure a secure connection.

An exemplary advantage of Clause 4 is that it enhances the reliability and stability of the connection between the cell tabs.

**Clause 5:** This clause describes a battery pack system that includes a sense lead connection for monitoring operational parameters of the battery pack.

An exemplary advantage of Clause 5 is that it allows for real-time monitoring of the battery pack's operational parameters, providing valuable data on the performance and condition of the battery pack.

**Clause 6:** This clause describes a battery pack system where the integrated isolation cover includes a heat-resistant material.

An exemplary advantage of Clause 6 is that it enhances the thermal management capabilities of the battery pack system, helping enhance the overall performance and lifespan of the battery pack.

**Clause 7:** This clause describes a battery pack system where the integrated isolation cover and linking element assembly is configured to provide strain relief for the cell tabs during thermal expansion and contraction.

An exemplary advantage of Clause 7 is that it helps to prevent mechanical stress and potential deformation of the cell tabs, ensuring a reliable and efficient connection.

**Clause 8:** This clause describes a battery pack system that includes a vibration dampening material positioned adjacent to the mechanical clips to reduce the transmission of mechanical stresses to the cell tabs.

An exemplary advantage of Clause 8 is that it helps to prevent mechanical wear and tear on the cell tabs, enhancing the durability and lifespan of the battery pack.

**Clause 9:** This clause describes a method for providing a battery pack system that involves securing a plurality of battery cell tabs using a mechanical clip and electrically connecting the secured mechanical clips with an integrated isolation cover and linking element assembly.

An exemplary advantage of Clause 9 is that it streamlines the assembly process of the battery pack system, potentially leading to increased production efficiency.

**Clause 10:** This clause describes a method for managing thermal propagation in a battery pack system that involves securing a plurality of battery cell tabs using a mechanical clip, electrically connecting the secured mechanical clips with an integrated isolation cover and linking element assembly, and placing a thermal propagation suppression device in an inter-cell terrace area between individual cells within the battery pack.

An exemplary advantage of Clause 10 is that it enhances the thermal management capabilities of the battery pack system, potentially enhancing its performance and lifespan.

**Clause 11:** This clause describes a battery pack system that employs clips to secure cell tabs, replacing traditional busbar plates.

An exemplary advantage of Clause 11 is that it simplifies the assembly process and reduces the area for cell linkage and energy distribution, leading to a more compact and efficient battery pack design.

**Clause 12:** This clause describes a battery pack system that includes an integrated isolation cover and link clips, replacing the traditional busbar frame and insulation cover.

An exemplary advantage of Clause 12 is that it simplifies the design and reduces the space requirements, leading to a more compact and efficient battery pack.

**Clause 13:** This clause describes a battery pack system that introduces a combination of thermal barriers and insulation cover to compartmentalize logical cell groups, limiting thermal propagation.

An exemplary advantage of Clause 13 is that it allows the battery pack to operate more efficiently.

**Clause 14:** This clause describes a battery pack system that includes a sense lead connection for monitoring voltage and current within the battery pack.

An exemplary advantage of Clause 14 is that it allows for real-time monitoring of the battery pack's operational parameters, providing valuable data on the performance and condition of the battery pack.

**Clause 15:** This clause describes a battery pack system that includes a method for thermal propagation suppression.

An exemplary advantage of Clause 15 is that it enhances the thermal management capabilities of the battery pack system, potentially enhancing its performance and lifespan.

**Clause 16:** This clause describes a battery pack system that eliminates the use of a busbar or battery management assembly (BMA), which is traditionally used in battery packs.

An exemplary advantage of Clause 16 is that it simplifies the design and assembly process, reducing the number of components and potentially leading to increased production efficiency.

**Clause 17:** This clause describes a battery pack system that eliminates the use of slots for inserting cell tabs. Instead, cell tabs are secured using a mechanical clip or similar device.

An exemplary advantage of Clause 17 is that it simplifies the assembly process, eliminating the time-consuming and complex process of inserting tabs into slots.

**Clause 18:** This clause describes a battery pack system that eliminates the traditional method of welding. Instead, cell tabs are secured using a mechanical clip, which provides a secure and efficient connection.

An exemplary advantage of Clause 18 is that it simplifies the assembly process, reducing the time and effort involved and potentially leading to increased production efficiency.

**Clause 19:** This clause describes a battery pack system that aims to reduce and enhances the bending or folding of cell tabs.

An exemplary advantage of Clause 19 is that it can lead to a more efficient and reliable connection between cell tabs, enhancing the overall performance of the battery pack.

**Clause 20:** This clause describes a battery pack system that uses a floating clip.

An exemplary advantage of Clause 20 is that the floating clip allows for a secure and efficient connection between cell tabs, while also providing flexibility to accommodate variations in cell tab size or shape.

**Clause 21:** This clause describes a battery pack system that results in a reduction in array components.

An exemplary advantage of Clause 21 is that this reduction simplifies the design and assembly process, leading to a more compact and efficient battery pack.

**Clause 22:** This clause describes a battery pack system that enhances the quality of the battery pack through the use of mechanical clips to secure cell tabs, along with the elimination of traditional components such as the busbar or BMA.

An exemplary advantage of Clause 22 is that it can lead to a more reliable and efficient battery pack.

**Clause 23:** This clause describes a battery pack system that includes an integrated insulation cover and link clips. The insulation cover provides electrical insulation, while the link clips provide a secure and efficient connection between cell tabs.

An exemplary advantage of Clause 23 is that this integrated design simplifies the assembly process and reduces the space requirements, leading to a more compact and efficient battery pack.

**Clause 24:** This clause describes a battery pack system that includes a sense lead connection, which is attached to the clip. This connection provides a means of monitoring the voltage and current within the battery pack.

An exemplary advantage of Clause 24 is that it allows for real-time monitoring of the battery pack's operational parameters, providing valuable data on the performance and condition of the battery pack.

**Clause 25:** This clause describes a battery pack system that includes the interlocking of thermal barriers with the insulation cover. This interlocking helps to manage the heat generated within the battery pack, preventing overheating and enhancing the overall performance and lifespan of the battery pack.

An exemplary advantage of Clause 25 is that it enhances the thermal management capabilities of the battery pack system, potentially enhancing its performance and lifespan.

**Clause 26:** This clause describes a battery pack system that includes the use of the inter-cell terrace area, which is the space between individual cells within the battery pack. This space is utilized for the placement of thermal propagation (TP) suppression devices, which help to manage the heat generated within the battery pack.

An exemplary advantage of Clause 26 is that by utilizing this space and reducing the potential for thermal propagation, the battery pack can operate more efficiently.

**Clause 27:** This clause describes a battery pack system that offers several advantages, including increased simplicity in design and assembly, reduction in major array components, and increased thermal propagation protection.

An exemplary advantage of Clause 27 is that it provides a comprehensive solution for battery pack design and assembly, potentially leading to increased production efficiency.

**Clause 28:** This clause describes a battery pack system that includes a sense lead connection for monitoring voltage and current within the battery pack, and a method for thermal propagation suppression.

An exemplary advantage of Clause 28 is that it enhances the efficiency of the battery pack system by providing real-time monitoring of operational parameters and managing the heat generated within the battery pack.

**Clause 29:** This clause describes a battery pack system that includes a mechanical clip or similar device, replacing traditional methods such as welding or staking. This approach simplifies the assembly process, reduces the area for cell linkage and energy distribution, and leads to a more compact and efficient battery pack design.

An exemplary advantage of Clause 29 is that it simplifies the assembly process of the battery pack system by eliminating traditional methods such as welding or staking. This can potentially lead to increased production efficiency.

**Clause 30:** This clause describes a battery pack system that includes the interlocking of inter-cell thermal barriers and side isolation covers to specific cells or cell groups within the battery pack, helping to suppress thermal propagation and reduce the potential for overheating.

An exemplary advantage of Clause 30 is that it enhances the thermal management capabilities of the battery pack system, potentially enhancing its performance and lifespan.

**Clause 31:** This clause describes a battery pack that includes a first battery cell pair with a first cell and a second cell. The first cell has a first terminal extending towards the second cell, and the second cell has a second terminal extending towards the first cell. The first terminal has a first terminating portion folded towards the second terminal and extending back towards the first cell, and the second terminal has a second terminating portion folded towards the first terminal and extending back towards the second cell.

An exemplary advantage of Clause 31 is that it provides a compact and efficient design for the battery pack, potentially enhancing the overall performance and lifespan of the battery pack.

**Clause 32:** This clause describes a battery pack that includes a clip configured to bias the first and second terminals towards each other, disposed in a space between the first and second terminals.

An exemplary advantage of Clause 32 is that it simplifies the assembly process and provides a secure and efficient connection between the cell tabs, potentially leading to increased production efficiency.

**Clause 33:** This clause describes a battery pack that includes a second battery cell pair next to the first battery cell pair and a linking element configured to electrically couple the first battery cell pair to the second battery cell pair.

An exemplary advantage of Clause 33 is that it allows for a cohesive and efficient energy distribution system within the battery pack, potentially enhancing the overall performance and efficiency of the battery pack.

**Clause 34:** This clause describes a battery pack where the linking element is configured to be inserted into the clip between the first terminal and the second terminal.

An exemplary advantage of Clause 34 is that it further simplifies the assembly process and ensures a secure connection between the cell tabs, potentially leading to increased production efficiency.

**Clause 35:** This clause describes a battery pack that includes a welded joint securing an interface between the first terminal, the clip, the linking element, and the second terminal.

An exemplary advantage of Clause 35 is that it provides a robust and reliable connection between the cell tabs, potentially enhancing the overall performance and efficiency of the battery pack.

**Clause 36:** This clause describes a battery pack that includes an insulating cover attachable to the linking element.

An exemplary advantage of Clause 36 is that it provides electrical insulation and physical separation between the cells.

**Clause 37:** This clause describes a battery pack that includes a sense lead connected to the clip.

An exemplary advantage of Clause 37 is that it provides a means of monitoring the voltage and current within the battery pack, ensuring its efficient operation.

**Clause 38:** This clause describes a battery pack where the clip is configured to electrically couple the first terminal to the second terminal.

An exemplary advantage of Clause 38 is that it simplifies the assembly process and provides a secure and efficient connection between the cell tabs, potentially leading to increased production efficiency.

**Clause 39:** This clause describes a battery pack that includes a thermal propagation suppression device disposed in a space between the first and second cells.

An exemplary advantage of Clause 39 is that it helps to manage the heat generated within the battery pack, preventing overheating and enhancing the overall performance and lifespan of the battery pack.

**Clause 40:** This clause describes a vehicle comprising the battery pack according to any of the previous clauses.

An exemplary advantage of Clause 40 is that it demonstrates a practical application of the battery pack, potentially enhancing the vehicle's performance and efficiency.

**Clause 41:** This clause describes a method of assembling a battery pack, where the battery pack includes a first battery cell pair comprising a first cell and a second cell next to each other in an assembled configuration, and the method includes forming the first terminal to extend towards the second cell, and forming the second terminal to extend towards the first cell.

An exemplary advantage of Clause 41 is that it provides an efficient and secure approach to the assembly of a battery pack, potentially enhancing the overall performance and efficiency of the battery pack.

**Clause 42:** This clause describes a method of assembling a battery pack, where the method includes assembling a clip to the battery pack in a space in between the first and second terminals to bias the first and second terminals towards each other.

An exemplary advantage of Clause 42 is that it simplifies the assembly process and provides a secure and efficient connection between the cell tabs, potentially leading to increased production efficiency.

**Clause 43:** This clause describes a method of assembling a battery pack, where the method includes inserting a linking element into the clip between the first terminal and the second terminal, wherein the linking element is configured to electrically couple the first battery cell pair to a second battery cell pair.

An exemplary advantage of Clause 43 is that it facilitates the electrical connection between the first and second battery cell pairs, potentially enhancing the overall performance and efficiency of the battery pack.

**Clause 44:** This clause describes a method of assembling a battery pack, where the method includes connecting a sense lead to the clip.

An exemplary advantage of Clause 44 is that it provides a means of monitoring the voltage and current within the battery pack, ensuring its efficient operation.

**Clause 45:** This clause describes a method of assembling a battery pack, where the method includes welding a joint securing an interface between the first terminal, the clip, the linking element and the second terminal.

An exemplary advantage of Clause 45 is that it provides a robust and reliable connection between the cell tabs, potentially enhancing the overall performance and efficiency of the battery pack.

**Clause 46:** This clause describes a method of assembling a battery pack, where the method includes securing the sense lead to the battery pack with the welded joint.

An exemplary advantage of Clause 46 is that it ensures a reliable connection for monitoring the operation of the battery pack, ensuring its efficient and reliable operation.

**Clause 47:** This clause describes a method of assembling a battery pack, where the method includes installing a thermal propagation suppression device in a space between the first and second cells.

An exemplary advantage of Clause 47 is that it helps to manage the heat generated within the battery pack, preventing overheating and enhancing the overall performance and lifespan of the battery pack.

**Clause 48:** This clause describes a method of assembling a battery pack, where the method includes attaching an insulating cover to the linking element prior to inserting the linking element into the clip.

An exemplary advantage of Clause 48 is that it provides electrical insulation and physical separation between the cells, enhancing and efficiency of the battery pack.

## Claims

1. A battery pack comprising:
a first battery cell pair comprising a first cell and a second cell next to each other, the first cell comprising a first terminal extending away from the first cell and towards the second cell, and the second cell comprising a second terminal extending away from the second cell and towards the first cell, wherein the first terminal comprises a first terminating portion folded towards the second terminal and extending back towards the first cell, and wherein the second terminal comprises a second terminating portion folded towards the first terminal and extending back towards the second cell.

2. The battery pack of claim 1, the battery pack comprising a clip configured to bias the first and second terminals towards each other, the clip being disposed in a space in between the first and second terminals.

3. The battery pack of claim 1 or 2, the battery pack comprising:
a second battery cell pair next to the first battery cell pair; and
a linking element configured to electrically couple the first battery cell pair to the second battery cell pair.

4. The battery pack of claim 3, wherein the linking element is configured to be inserted into the clip between the first terminal and the second terminal.

5. The battery pack of claim 4, the battery pack comprising a welded joint securing an interface between the first terminal, the clip, the linking element and the second terminal.

6. The battery pack of any of claims 1 to 5, the battery pack comprising an insulating cover attachable to the linking element.

7. The battery pack of any of claims 2 to 6, the battery pack comprising a sense lead connected to the clip.

8. The battery pack of any of claims 2 to 7, wherein the clip is configured to electrically couple the first terminal to the second terminal.

9. The battery pack of any preceding claim, the battery pack comprising a thermal propagation suppression device disposed in a space between the first and second cells.

10. A vehicle comprising the battery pack according to any of claims 1 to 9.

11. A method of assembling a battery pack, the battery pack comprising a first battery cell pair comprising a first cell and a second cell next to each other in an assembled configuration, the first cell comprising a first terminal extending away from the first cell, and the second cell comprising a second terminal extending away from the second cell, the method comprising:
forming the first terminal to extend towards the second cell, and to define a first terminating portion folded towards the second terminal and extending back towards the first cell in an assembled configuration; and
forming the second terminal to extend towards the first cell, and to define a second terminating portion folded towards the first terminal and extending back towards the second cell in an assembled configuration.

12. The method of claim 11, the method comprising:
assembling a clip to the battery pack in a space in between the first and second terminals to bias the first and second terminals towards each other.

13. The method of claims 11 or 12, the method comprising:
inserting a linking element into the clip between the first terminal and the second terminal, wherein the linking element is configured to electrically couple the first battery cell pair to a second battery cell pair.

14. The method of any of claims 12 to 13, the method comprising:
connecting a sense lead to the clip.

15. The method of claim 14, the method comprising:
welding a joint securing an interface between the first terminal, the clip, the linking element and the second terminal.
